# FASCICULE DE BREVET EUROPEEN

(11) **EP 1 775 441 B1**
(45) Date de publication et mention de la délivrance du brevet: **18.06.2008**
(21) Numéro de dépôt: 06291459.3
(22) Date de dépôt: 18.09.2006
(51) Int. Cl.: F02B 37/013, F01N 5/04, F02B 37/18, F02B 37/12

(54) **Dispositif de suralimentation pour moteur à combustion interne, et véhicule automobile équipé d'un tel dispositif**
Vorrichtung zur Aufladung eines Verbrennungsmotors sowie Fahrzeug mit einer solchen Vorrichtung
Supercharging device for an internal combustion engine and vehicle equipped with such a device

(30) Priorité: 21.09.2005 FR 0509652
(43) Date de publication de la demande: 18.04.2007
(73) Titulaire: Melchior, Jean Frédéric, 75006 Paris (FR)
(72) Inventeur: Melchior, Jean Frédéric, 75006 Paris (FR)
(74) Mandataire: Ramey, Daniel

(56) Documents cités:
- EP-A- 0 397 768
- EP-A- 0 438 804
- EP-A- 0 615 059
- EP-B1- 0 793 775
- FR-A- 2 317 492
- FR-A- 2 338 382
- FR-A- 2 468 737
- FR-A- 2 538 450
- US-A- 4 463 564
- US-B1- 6 202 413

## Description

La présente invention concerne un dispositif de suralimentation pour moteur à combustion interne, du type comprenant une turbine couplée à un compresseur, un conduit d'alimentation de la turbine en gaz sous pression, un conduit d'évacuation des gaz détendus dans la turbine, et des moyens de by-pass de la turbine comprenant un conduit de by-pass reliant le conduit d'alimentation au conduit d'évacuation.

De façon classique, dans un dispositif de suralimentation de ce type, la turbine est alimentée en gaz d'échappement sous pression brûlés par le moteur et utilise l'énergie de ces gaz d'échappement pour entraîner le compresseur, qui alimente le moteur en air frais sous pression.

La turbine est généralement dimensionnée pour que le compresseur délivre une pression d'air désirée à un régime de rotation partiel du moteur, régime auquel le moteur expulse vers la turbine un débit de gaz d'échappement déterminé.

Au-dessus de ce régime partiel, le débit de gaz d'échappement augmente, et il en résulte l'augmentation de la contre pression d'échappement en amont de la turbine et en sortie du moteur, pouvant dégrader les performances du moteur, et en particulier augmenter sa consommation de carburant.

Les moyens de by-pass de la turbine permettent le passage d'une partie des gaz d'échappement, nommée par la suite gaz dérivés, directement de l'amont de la turbine vers l'aval de la turbine, sans passage à travers la turbine, de façon à limiter la contre pression en amont de la turbine au niveau juste nécessaire pour atteindre la pression d'air désirée en sortie du compresseur.

FR 2 338 382 A1 décrit un turbocompresseur avec éjecteur en aval de la turbine avec éjection des gaz d'échappement du conduit de by-pass.

EP 0 793 775 B1 décrit une série des turbocompresseurs.

Néanmoins, l'énergie potentielle contenue dans les gaz d'échappement dérivés par les moyens de by-pass est dégradée intégralement en chaleur, et le rendement énergétique médiocre du dispositif de suralimentation limite la proportion de gaz d'échappement pouvant être dérivés dans les moyens de by-pass.

Un but de l'invention est de proposer un dispositif de suralimentation possédant un rendement amélioré, et permettant d'augmenter la proportion de gaz d'échappement pouvant être dérivés.

A cet effet, l'invention propose un dispositif de suralimentation pour moteur à combustion interne, du type précité, caractérisé en ce que le conduit de by-pass débouche dans le conduit d'évacuation par une tuyère de détente permettant l'éjection des gaz dérivés par le conduit de by-pass dans un tronçon de mélange du conduit d'évacuation sensiblement selon la direction et le sens d'écoulement dans le tronçon de mélange des gaz détendus dans la turbine, pour accroître la quantité de mouvement des gaz détendus dans la turbine par mélange avec les gaz dérivés selon le principe d'un éjecteur aérodynamique, dont le flux propulseur est constitué par les gaz dérivés par le conduit de by-pass, et le flux entraîné est prélevé sur les gaz détendus dans la turbine.

Selon d'autres modes de réalisation, le dispositif de suralimentation comprend une ou plusieurs des caractéristiques suivantes, prise(s) isolément ou selon toutes les combinaisons possibles :
- la section du col de la tuyère est réglable ;
- la tuyère comprend un canal annulaire convergent délimité par la paroi intérieure d'un convergent et la paroi extérieure d'un organe de fermeture dont la position relative est réglable entre une position de fermeture de la tuyère et une position d'ouverture maximale de la tuyère ;
- le flux entraîné est introduit dans le tronçon de mélange à l'intérieur du flux propulseur ;
- la paroi intérieure du convergent de la tuyère est un prolongement convergent d'une paroi intérieure du tronçon de mélange et l'organe de fermeture est un manchon tubulaire, la surface extérieure du manchon délimitant la tuyère, et la surface intérieure du manchon délimitant un tronçon amont du conduit d'évacuation qui alimente le tronçon de mélange en gaz détendus dans la turbine;
- le flux entraîné est introduit dans le tronçon de mélange à l'extérieur du flux gaz propulseur ;
- le tronçon de mélange s'alimente en gaz détendus dans la turbine par un canal annulaire compris entre un évasement prolongeant le tronçon de mélange vers l'amont et une paroi extérieure du convergent de la tuyère ;
- la turbine est une turbine radiale rotative autour d'un axe, à entrée radiale et sortie axiale, le tronçon de mélange s'étendant selon l'axe de rotation de la turbine ;
- la tuyère est de révolution autour d'un axe, une partie amont du tronçon de mélange adjacente à la tuyère étant de révolution autour de l'axe de la tuyère, le tronçon de mélange se développant vers l'aval autour de cet axe ;
- la turbine est une première turbine le dispositif comprenant une deuxième turbine radiale disposée en série avec la première turbine et s'alimentant en gaz à partir d'une volute reliée au tronçon de mélange du conduit d'évacuation de la première turbine ;
- des moyens de by-pass de la deuxième turbine comprennent un deuxième conduit de by-pass s'alimentant dans le conduit d'évacuation de la première turbine en amont de la tuyère des moyens de by-pass de la première turbine, et débouchant dans un deuxième conduit d'évacuation de la deuxième turbine ;
- la paroi intérieure du tronçon de mélange de la première turbine est une surface réglée qui s'appuie sur une section circulaire de la partie amont de révolution du tronçon de mélange et sur la section droite critique de la volute d'alimentation de la deuxième turbine radiale de façon à constituer un prolongement tangent de cette volute ;
- la section du col de la tuyère des moyens de dérivation de la première turbine est réglable entre une valeur minimale, de préférence nulle, et une valeur maximale comprise entre une et deux fois la section critique de la première turbine, et la section critique de la deuxième turbine est comprise entre deux et trois fois la section critique de la première turbine ; et
- le tronçon de mélange de la deuxième turbine débouche dans un diffuseur divergent débouchant sur des moyens de traitement des gaz d'échappement.

L'invention et ses avantages seront mieux compris à la lecture de la description qui va suivre, donnée uniquement à titre d'exemple, et faite en se référant aux dessins annexés, sur lesquels :
- la figure 1 est une vue schématique d'un moteur à combustion interne comportant un dispositif de suralimentation conforme à l'invention ;
- la figure 2 est une vue en coupe de deux turbines disposées en série d'un dispositif de suralimentation conforme à l'invention ; et
- la figure 3 est une vue analogue à celle de la figure 2, et représente deux turbines d'un dispositif de suralimentation selon une variante.

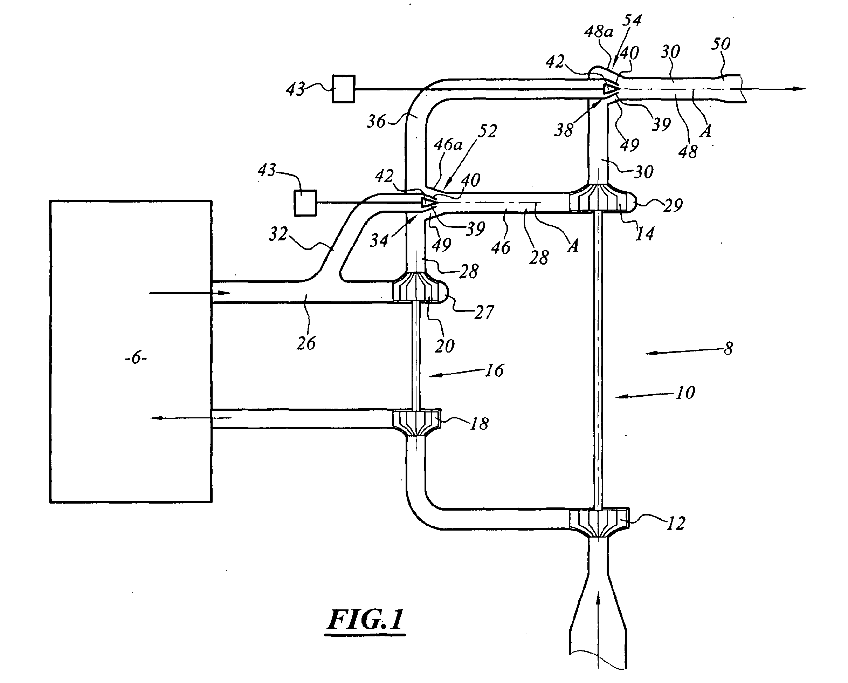

Tel que représenté sur la figure 1, le moteur à combustion interne 6 comprend un dispositif de suralimentation 8 comportant un turbocompresseur 10 basse pression, comprenant un compresseur 12 couplé à une turbine 14, et un turbocompresseur 16 haute pression comprenant un compresseur 18 couplé à une turbine 20.

Les compresseurs 12 et 18 sont disposés en série, et alimentent le moteur 6 en air frais sous pression. Le compresseur 18 est situé en aval du compresseur 12.

Les turbines 14 et 20 sont disposées en série, et reçoivent les gaz d'échappement issus du moteur 6. La turbine 20 est située en amont de la turbine 14.

En fonctionnement, l'air frais est comprimé successivement dans le compresseur 12 puis le compresseur 18, avant d'être envoyé dans le moteur 6. Les gaz d'échappement sont détendus successivement dans la turbine 20, puis dans la turbine 14.

La turbine 20 s'alimente en gaz dans un conduit d'alimentation 26 débouchant par exemple dans une volute d'alimentation 27 en spirale de la turbine 20, et rejette les gaz détendus dans un premier conduit d'évacuation 28.

La turbine 14 s'alimente en gaz dans le conduit 28, qui forme donc le conduit d'alimentation de la turbine 14, et rejette les gaz détendus dans un deuxième conduit d'évacuation 30. Le conduit 28 débouche dans une volute d'alimentation 29 en spirale de la turbine 14.

Le dispositif 8 comprend un premier conduit 32 de by-pass de la turbine 20 s'alimentant dans le conduit 26, et débouchant dans le conduit 28 par une première tuyère de détente 34.

Le dispositif 8 comprend un deuxième conduit 36 de by-pass de la turbine 14 s'alimentant dans le conduit 28 en amont de la tuyère 34, et débouchant dans le conduit 30 par une deuxième tuyère de détente 38.

Chaque tuyère 34, 38 est définie par un canal annulaire 39 de révolution autour d'un axe A définissant l'axe A de la tuyère 34, 38, et convergent vers la sortie de la tuyère jusqu'à un col, constituant la plus petite section de la tuyère 34, 38.

Le canal 39 est délimité entre une paroi intérieure d'un tube convergent 40, et un corps central 42 disposé à l'intérieur du tube 40.

La section du col de chaque tuyère 34, 38 est réglable, afin de régler le débit de gaz dérivés traversant la tuyère 34, 38.

A cette effet, le corps 42 de chaque tuyère 34, 38 est monté mobile par rapport au tube 40 selon l'axe A de la tuyère 34, 38 entre une position avancée de fermeture de la tuyère 34, 38, dans laquelle le corps 42 est en contact sensiblement étanche avec la paroi intérieure du tube 40, et une position reculée d'ouverture maximale, dans laquelle un espace est ménagé entre la paroi intérieure du tube 40 et le corps 42.

Le déplacement de chaque corps 42 est commandé par un actionneur linéaire 43.

Chaque tuyère 34, 38 débouche dans un tronçon 46, 48 du conduit d'évacuation 28, 30 correspondant. Chaque tronçon 46, 48 s'alimente en gaz détendus dans la turbine 20, 14 par un canal annulaire 49 délimité entre la paroi intérieure d'un évasement 46a, 48a prolongeant le tronçon 46, 48 vers l'amont, et une paroi extérieure du tube 40 de la tuyère 34, 38.

Chaque tronçon 46, 48 s'étend de façon sensiblement rectiligne en aval de la tuyère 34, 38 correspondante sensiblement selon l'axe A de la tuyère 34, 38. Les tuyères 34, 38 sont donc orientées de façon à éjecter les gaz dérivés dans les tronçons 46, 48 dans la direction et le sens d'écoulement des gaz dans ces tronçons 46, 48.

De préférence, chaque tuyère 34, 38 est de révolution autour de son axe A, chaque tronçon 46, 48 se développant vers l'aval autour de l'axe A de la tuyère 34, 38 débouchant dans ce tronçon 46, 48.

Le tronçon 46 débouche dans la volute 29.

Le tronçon 48 débouche dans un diffuseur divergent 50 débouchant par exemple sur des moyens de traitement des gaz d'échappement.

La pression totale P de gaz est égale à la somme d'une pression statique P_{statique} et d'une pression dynamique P_{dynamique}, qui est proportionnelle à la masse volumique des gaz et à la vitesse au carré d'écoulement des gaz.

En fonctionnement, les gaz issus du moteur 6 sont introduits dans la turbine 20 à une pression totale P1, sont détendus dans la turbine 20 à une pression totale P2, inférieure à P1, sont introduits dans la turbine 14 à une pression totale P3, sont détendus dans la turbine 14 à une pression totale P4, inférieure à P3, et envoyés à l'entrée du diffuseur 50 à une pression totale P5.

Lorsque le corps 42 de la tuyère 34 est en position de fermeture, la pression totale P3 est sensiblement égale à la pression totale P2.

Lorsque le corps 42 de la tuyère 34 est en position d'ouverture, un flux de gaz dérivés, à la pression P1, s'écoule dans le conduit 32 de l'amont vers l'aval de la turbine 20, sans traverser la turbine 20. Le débit de gaz dérivés dans le conduit 32 dépend de l'ouverture de la tuyère 34. Plus la tuyère 34 est ouverte, plus la proportion de gaz dérivés est importante.

Les gaz dérivés sont éjectés par la tuyère 34 dans le tronçon 46 avec une détente et une augmentation de leur quantité de mouvement résultant de la transformation de leur énergie de pression en énergie cinétique. Les gaz dérivés sont éjectés avec une quantité de mouvement supérieure à celle des gaz détendus dans la turbine 20.

Les dimensions du tronçon 46 sont prévues pour favoriser les échanges de quantité de mouvement. En particulier, la longueur L du tronçon 46 est comprise de préférence entre 5 et 10 fois son diamètre D.

Les gaz éjectés par la tuyère 34 et une partie des gaz détendus dans la turbine 20 se mélangent dans le tronçon 46 avec un échange de quantité de mouvement, de façon que la quantité de mouvement des gaz détendus dans la turbine 20 est augmentée, et que la quantité de mouvement des gaz mélangés, résultant du mélange des gaz détendus dans la turbine 20 avec les gaz dérivés dans le conduit 30, est supérieure à celle des gaz détendus dans la turbine 20 en amont de la tuyère 34.

Ainsi, la tuyère 34 définit avec le tronçon 46 un éjecteur aérodynamique 52 prélevant un flux propulseur de gaz (les gaz dérivés) en amont de la turbine 20 et un flux entraîné de gaz en aval de la turbine 20, et mélangeant le flux propulseur et le flux entraîné avec un échange de quantité de mouvement pour augmenter la quantité de mouvement du flux entraîné.

En entrée de la turbine 14, les gaz mélangés possèdent une pression statique P3_{statique} sensiblement égale à la pression statique P2_{statique} des gaz détendus dans la turbine 20, et une pression dynamique P3_{dynamique} supérieure à celle P2_{dynamique} des gaz détendus dans la turbine 20. La pression totale P3 est donc supérieure à la pression totale P2, et une énergie plus importante peut être récupérée dans la turbine 14.

L'éjecteur 52 permet donc de convertir la pression des gaz dérivés en énergie cinétique, et d'utiliser cette énergie cinétique pour augmenter la pression en entrée de la turbine 14. Ainsi, une énergie plus importante est récupérée dans la turbine 14, et le rendement global du dispositif de suralimentation 8 est amélioré.

Ce rendement amélioré permet d'augmenter la proportion de gaz dérivés, et d'améliorer les performances du moteur 6, notamment dans les hauts régimes, dans lesquels le débit de gaz d'échappement est très supérieur au débit nécessaire pour obtenir la pression d'air désirée en sortie du compresseur 18.

Pour favoriser le mélange du flux entraîné et du flux propulseur, de préférence, la paroi intérieure du tronçon 46 est une surface réglée qui s'appuie sur une section circulaire d'entrée du tronçon 46 située sensiblement au droit de la sortie de la tuyère 34, et sur la section critique d'entrée de la volute d'alimentation de la turbine 14, et le tronçon 46 constitue un prolongement tangent de la volute 29.

En faisant l'hypothèse que la pression totale P1 est égale à 6 bars et que la pression totale P2 est égale à 3 bars, lorsque la tuyère 34 est fermée, on a sensiblement P3 = P2 = 3 bars.

L'invention permet d'espérer récupérer, lorsque la tuyère 34 est ouverte de façon à dériver 50% des gaz, 1 bar de pression dynamique, et donc d'obtenir une pression totale P3 de 4 bars, supérieure à la pression totale P2.

De façon analogue, la tuyère 38 définit avec le tronçon 48 un deuxième éjecteur aérodynamique 54 prélevant un flux propulseur de gaz en amont de la turbine 14 et un flux entraîné de gaz en aval de la turbine 14, et mélangeant le flux propulseur et le flux entraîné avec un échange de quantité de mouvement.

Ainsi, lorsque le corps 42 de la tuyère 38 est en position de fermeture, la pression totale P5 est égale à la pression totale P4, et lorsque le corps 42 de la tuyère 38 est en position d'ouverture, la pression totale P5 est supérieure à la pression totale P4.

Le conduit 36 s'alimente dans le conduit 28 en amont de l'éjecteur 52 et ne perturbe pas le fonctionnement de l'éjecteur 52. La tuyère 34 étant dessinée pour éjecter les gaz en aval dans le tronçon 46, ces gaz ne risquent pas de remonter vers l'entrée du conduit 36.

Les moyens de by-pass de la turbine 14 permettent d'améliorer le taux de détente de la turbine 14, soit le rapport de la pression totale P3 en entrée de la turbine 14 sur la pression statique P4_{statique} en sortie de la turbine 14.

En effet, la tuyère 38, lorsqu'elle est ouverte, permet d'augmenter la pression P5, et une pression statique P4_{statique} plus faible est nécessaire en sortie de la turbine 14 que lorsque la tuyère 38 est fermée pour assurer l'obtention en aval d'une pression P5 suffisante pour l'écoulement des gaz. Par conséquent, le taux de détente de la turbine 14 est augmenté, et l'énergie récupérée par la turbine 14 est plus importante.

De plus, lorsque la tuyère 38 est ouverte, la masse de gaz détendus dans la turbine 20 s'écoulant dans le tronçon 46 diminue. Il en résulte que, dans l'éjecteur 52, la proportion des gaz à forte énergie (les gaz issus de la tuyère 34) augmente par rapport à celle des gaz à faible énergie (les gaz détendus dans la turbine 20), que la quantité de mouvement des gaz mélangés augmente, et que, finalement, la pression totale P3 augmente.

L'ouverture de la tuyère 38 provoque donc à la fois une augmentation de la pression totale P3 et une diminution de la pression statique P4_{statique}. Ceci permet d'améliorer l'énergie récupérée dans la turbine 14, et le rendement du dispositif 8.

De préférence, afin d'obtenir une répartition satisfaisante de l'énergie entre les turbines 14 et 20, la section du col de la tuyère 34 est réglable entre une valeur minimale, de préférence nulle, et une valeur maximale sensiblement comprise entre une et deux fois la section critique de la turbine 20, et la section critique de la turbine 14 est comprise entre deux et trois fois la section critique de la turbine 20.

Le tronçon 46 est de préférence légèrement convergent pour accélérer l'écoulement des gaz jusqu'à la section critique de la volute d'alimentation de la turbine 14. Le tronçon 48 est de préférence cylindrique.

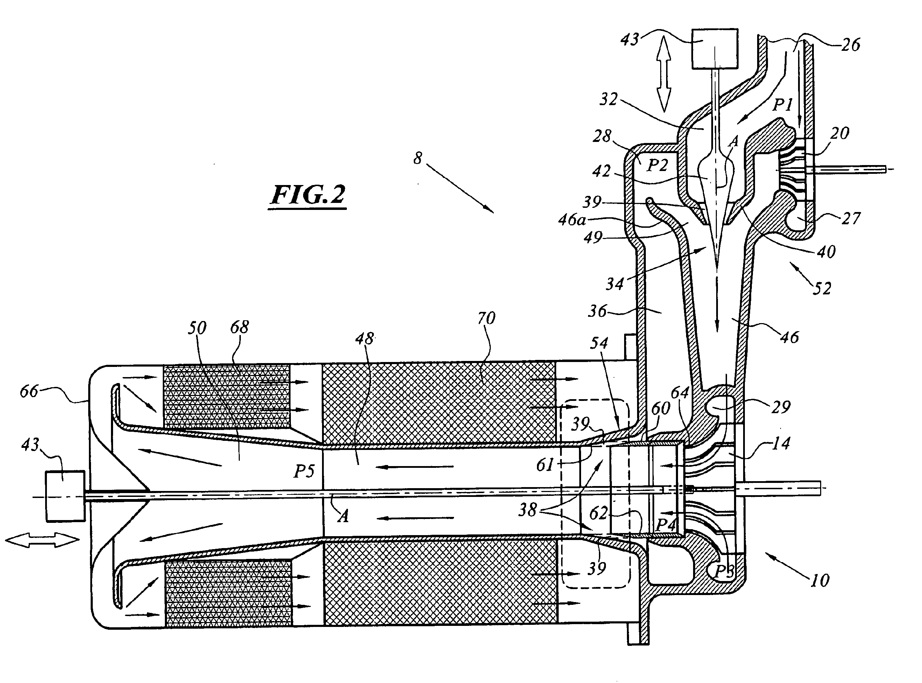

Le mode de réalisation illustré sur la figure 2, sur laquelle les références numériques aux éléments analogues ont été reprises, diffère du mode de réalisation précédent par la réalisation de l'éjecteur 54, qui permet d'introduire le flux propulseur de gaz à l'extérieur du flux entraîné de gaz.

A cet effet, le canal 39 de la tuyère 38 est délimité entre une paroi intérieure d'un prolongement convergent 61 du canal 48 et la surface extérieure 60 d'un manchon tubulaire cylindrique 62 d'axe l'axe A de la tuyère 38, dont la surface intérieure 64 définit un tronçon du conduit 30 d'évacuation de la turbine 14 s'étendant entre la turbine 14 et le tronçon de mélange 48.

Pour le réglage de la section du col de la tuyère 38, le manchon 62 est monté mobile par rapport au convergent 61 selon l'axe A de la tuyère 38 sous l'effet d'un actionneur linéaire 43, entre une position de fermeture de la tuyère 38, dans laquelle une extrémité conique 64 du manchon 62 est en contact sensiblement étanche avec la paroi intérieure du convergent 61, et une position d'ouverture, dans laquelle un espace est ménagé entre la paroi intérieure du convergent 61 et l'extrémité 64.

La paroi intérieure du convergent 61 est un prolongement vers l'amont d'une paroi intérieure du tronçon de mélange 48.

Tel que représenté sur la figure 2, dans un éjecteur du type de l'éjecteur 52, le corps 42 de la tuyère 34 se prolonge avantageusement vers l'aval par une pointe conique pour assurer une évolution continue des sections du conduit.

Le diffuseur 50 débouche sur une diffuseur radial 66 qui arrose des moyens de traitement des gaz d'échappement 68, 70, par exemple un filtre à particule ou un catalyseur, annulaires autour du diffuseur 50 et du tronçon 48 pour préserver la compacité du moteur 6.

On notera que la turbine 14 est une turbine radiale d'axe l'axe A du la tuyère 38, la turbine étant à entrée radiale et sortie axiale. Les gaz sortent de la turbine 14 avantageusement en s'écoulant suivant l'axe A de la tuyère 38 et du tronçon 48.

Ceci permet d'exploiter la quantité de mouvement des gaz détendus dans la turbine 14, et donc leur pression dynamique P4_{dynamique}, même si elle est faible, et d'améliorer encore le rendement du dispositif 8.

En variante l'éjecteur 52 est du type de l'éjecteur 54, c'est-à-dire qu'il permet une introduction du flux propulseur de gaz à l'extérieur du flux entraîné de gaz.

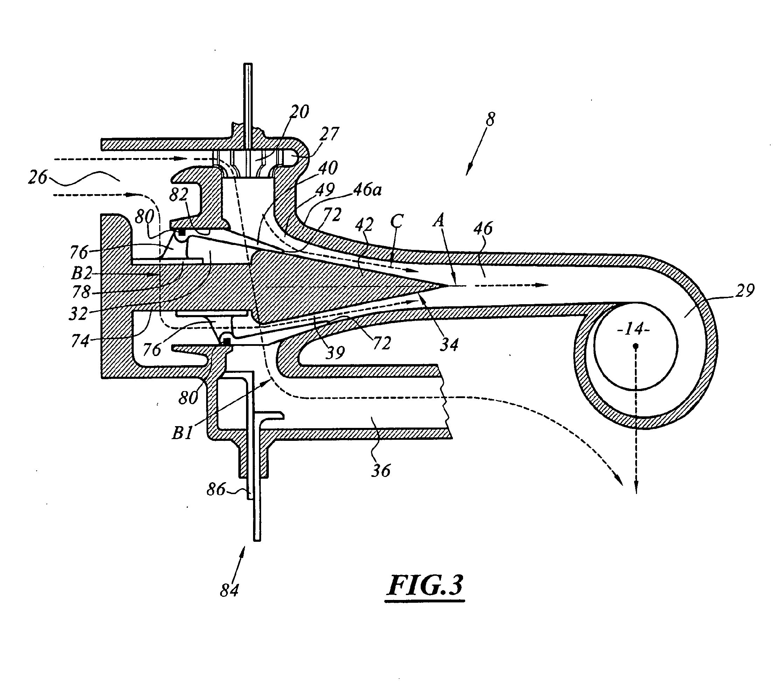

Le dispositif 8 selon le mode de réalisation représenté sur la figure 3, sur laquelle les références aux éléments semblables à ceux des figures 1 et 2 ont été reprises, diffère de celui de la figure 2 en ce qu'il permet de fermer le canal 49 d'alimentation du tronçon 46 en gaz détendus dans la turbine 20.

A cet effet, le tube 40 de la tuyère 34 est monté coulissant par rapport au carter de la turbine 20, selon l'axe A de la tuyère 34, entre une position reculée dans laquelle le canal 39 est fermé et le canal 49 est ouvert, et une position avancée dans laquelle la surface extérieure d'une extrémité avant 72 du tube 40 est en contact étanche avec la paroi intérieure de l'évasement 46a, de sorte que le canal 49 est fermé, le canal 39 étant ouvert. Sur la figure 3, une première moitié (en haut sur la figure 3) du tube 40 est représentée en position reculée, et une deuxième moitié (en bas sur la figure 3) du tube 40 est représentée en position avancée.

Le corps central 42 est monté fixe par rapport au carter de la turbine 20.

Plus précisément, le corps 42 est porté à l'extrémité d'une tige 74 solidaire du carter de la turbine 20, et le tube 40 est disposé autour du corps 42, et relié par des bras 76 radiaux à un manchon 78 monté coulissant sur la tige 74.

Pour assurer l'étanchéité entre le tube 40 et le carter de la turbine 20, le tube 40 est muni par exemple d'un segment d'étanchéité 80 qui coulisse dans un alésage cylindrique 82 du carter de la turbine 20.

Dans la position reculée du tube 40 la surface intérieure de l'extrémité 72 est en contact étanche avec le corps 42 pour fermer le canal 39.

Le tube 40 est déplaçable dans une pluralité de positions intermédiaires entre sa position reculée et sa position avancée, afin de régler les ouvertures des canaux 39 et 49.

Le déplacement du tube 40 est commandé par exemple à l'aide d'un actionneur linéaire (non représenté) agissant sur le manchon 78.

Le conduit 36 de la turbine 14 comporte un dispositif d'obturation réglable 84 constitué par une simple soupape 86. En variante, le conduit 36 est obturé par une tuyère réglable 38 telle que décrite précédemment.

Sur la figure 3, une moitié (à gauche sur la figure 3) de la soupape 86 est représentée en position de fermeture, et l'autre moitié (à droite sur la figure 3) est représentée en position d'ouverture.

En fonctionnement, à bas régime moteur, le tube 40 est en position reculée, le canal 49 est ouvert et le canal 39 fermé, tous les gaz du conduit 26 sont détendus successivement dans la turbine 20 et la turbine 14 qui fonctionnent en série, comme illustré par une flèche C. Le conduit 36 est fermé.

Lorsque le régime moteur augmente, le tube 40 est avancé progressivement pour créer un flux croissant de gaz dérivés dans le canal 39 qui accélèrent les gaz détendus dans la turbine 20 évacués dans le canal 49. Le conduit 36 est maintenu fermé.

A partir d'une certaine position du tube 40, la soupape 86 est ouverte progressivement quand le tube 40 poursuit son mouvement d'ouverture du canal 39 et de fermeture du canal 49. Un flux dérivé s'installe ainsi dans le conduit 36.

A partir d'une deuxième position du tube 40, ce dernier est rapidement avancé pour amener son extrémité 72 en contact étanche avec la paroi interne de l'évasement 46a afin de fermer le canal 49 et d'ouvrir largement le canal 39. Simultanément la soupape 86 est amenée en pleine ouverture pour permettre aux gaz détendus dans la turbine 20 de s'évacuer dans le conduit 36 selon la flèche B1. Les turbines 14 et 20 fonctionnent alors en parallèle. La turbine 14 est alors directement alimentée par le conduit 26, via le canal 39, selon la flèche B2.

Ainsi, le dispositif de la figure 3 permet de passer simplement et de façon continue d'une configuration série pure à une configuration série avec dérivation de la turbine haute pression, puis à une configuration série avec dérivation des turbines haute pression et basse pression pour aboutir à une configuration parallèle.

Ce changement de configuration est effectué à l'aide du seul actuateur de l'organe mobile (tube 40) de la tuyère 34, ce qui simplifie le dispositif de contrôle et réduit le coût de fabrication.

En outre, en configuration parallèle, l'utilisation du canal 39 de même axe que le tronçon 46 alimentant la turbine 14 permet de limiter les pertes de charge, et augmente par conséquent le rendement global du dispositif 8.

Le dispositif 8 de la figure 3 est particulièrement adapté pour la mise en oeuvre d'un procédé de turbocompression biétagée tel que celui décrit dans FR 2 853 011, dans lequel les turbines fonctionnent en série en dessous d'un régime déterminée, et en parallèle au-dessus de ce régime déterminé. En effet, le dispositif selon la figure 3 permet d'améliorer le rendement dans les configurations où les turbines sont en série et partiellement by-passées.

En position avancée du tube 40, pour permettre l'évacuation convenable des gaz détendus dans la turbine 20, en position d'ouverture maximale de la soupape 86, le conduit 36 possède de préférence une section sensiblement égale à la section du conduit 28.

Selon un procédé de mise en oeuvre du dispositif de la figure 3, on passe d'une configuration des turbines en série à une configuration des turbines en parallèles (par exemple au-dessus d'un régime déterminé) en déplaçant le tube 40 en position de fermeture du canal 49, et en déplaçant simultanément la soupape 86 en position d'ouverture maximale.

Quant le conduit 36 débouche dans le conduit 30 d'évacuation de la turbine 14, il est intéressant de remplacer la soupape 86 par une tuyère 38 telle que sur les figures 1 et 2.

Dans une variante non représentée, le corps 42 est également mobile par rapport à la turbine 20, afin de pouvoir modifier indépendamment les ouvertures des canaux 39 et 49.

## Revendications

1. Dispositif de suralimentation pour moteur à combustion interne, du type comprenant une turbine haute pression (20) couplée à un compresseur (18), un conduit d'alimentation (26) de la turbine haute pression (20) en gaz sous pression, un conduit d'évacuation (28) des gaz détendus dans la turbine haute pression (20), et des moyens (32, 34) de by-pass de la turbine haute pression (20) comprenant un conduit de by-pass (32) reliant le conduit d'alimentation (26) au conduit d'évacuation (28), et une turbine basse pression (14) couplée à un compresseur (12) et s'alimentant en gaz à partir du conduit d'évacuation (28) de la turbine haute pression (20),
**caractérisé en ce que** le conduit de by-pass (32) de la turbine haute pression (20) débouche dans le conduit d'évacuation (28) de la turbine haute pression (20) par une tuyère de détente (34) permettant l'éjection des gaz dérivés par le conduit de by-pass (32) dans un tronçon de mélange (46) du conduit d'évacuation (28) sensiblement selon la direction et le sens d'écoulement dans le tronçon de mélange (46) des gaz détendus dans la turbine haute pression (20), pour accroître la quantité de mouvement des gaz détendus dans la turbine haute pression (20) par mélange avec les gaz dérivés selon le principe d'un éjecteur aérodynamique, dont le flux propulseur est constitué par les gaz dérivés par le conduit de by-pass (32) de la turbine haute pression (20), et le flux entraîné est prélevé sur les gaz détendus dans la turbine haute pression (20).

2. Dispositif selon la revendication 1, **caractérisé en ce que** la section du col de la tuyère (34) est réglable.

3. Dispositif selon la revendication 2, **caractérisé en ce qu**e la section du col de la tuyère (34) des moyens de by-pass (32, 34) de la turbine haute pression (20) est réglable entre une valeur minimale, de préférence nulle, et une valeur maximale comprise entre une et deux fois la section critique de la turbine haute pression (20), et la section critique de la turbine basse pression (14) est comprise entre deux et trois fois la section critique de la turbine haute pression (20).

4. Dispositif selon l'une quelconque des revendications précédentes, **caractérisé en ce que** la tuyère (34) est constituée par un canal annulaire convergent (39) délimité par la paroi intérieure d'un tube convergent (40) et la paroi extérieure d'un corps central (42), dont la position relative est réglable entre une position de fermeture de la tuyère (34) et une position d'ouverture maximale de la tuyère (34).

5. Dispositif selon la revendication 4, **caractérisé en ce que** le tube convergent (40) est fixe par rapport à un carter de la turbine haute pression (20) et le corps central (42) est mobile par rapport audit carter.

6. Dispositif selon la revendication 4, **caractérisé en ce que** le tronçon de mélange (46) s'alimente en gaz détendus dans la turbine haute pression (20) par un canal annulaire (49) délimité entre un évasement (46a) prolongeant le tronçon de mélange (46) vers l'amont et une paroi extérieure du tube convergent (40) de la tuyère (34).

7. Dispositif selon la revendication 6, **caractérisé en ce que** le tube convergent (40) est mobile par rapport à un carter de la turbine haute pression (20) entre une position de fermeture du canal (39) de la tuyère (34), et une position de fermeture du canal annulaire (49) d'alimentation du tronçon de mélange (46) en gaz détendus dans la turbine haute pression (20).

8. Dispositif selon la revendication 7, **caractérisé en ce que** le corps central (42) de la tuyère (34) est mobile par rapport au carter de la turbine haute pression (20)

9. Dispositif selon l'une quelconque des revendications précédentes, **caractérisé en ce que** la paroi intérieure du tronçon de mélange (46) est une surface réglée qui s'appuie sur une section circulaire d'entrée du tronçon de mélange (46) et sur la section droite critique de la volute (29) d'alimentation de la turbine basse pression (14) de façon à constituer un prolongement tangent de cette volute (29).

10. Dispositif selon l'une quelconque des revendications précédentes, **caractérisé en ce qu**'il comprend des moyens de by-pass (38) de la turbine basse pression (14), comprenant un deuxième conduit de by-pass (36) s'alimentant dans le conduit d'évacuation (28) de la turbine haute pression (20), en amont de la tuyère (34).

11. Dispositif selon la revendication 10, **caractérisé en ce qu**'il comprend un dispositif d'obturation réglable (86, 38) du deuxième conduit de-by-pass (36), pour régler le débit de gaz dérivés dans le deuxième conduit de by-pass (36).

12. Dispositif selon la revendication 11 dépendante de la revendication 7, **caractérisé en ce que,** lorsque le dispositif d'obturation (84) est en dans une position d'ouverture maximale, le deuxième conduit de by-pass (36) possède une section sensiblement égale à la section du conduit d'évacuation (28) de la turbine haute pression (20).

13. Dispositif selon l'une quelconque des revendications 10 à 12, **caractérisé en ce que** le deuxième conduit de by-pass (36) débouche dans un tronçon de mélange (48) d'un deuxième conduit d'évacuation (30) des gaz détendus dans la turbine basse pression (14) par une tuyère de détente (38) permettant l'éjection des gaz dérivés par le deuxième conduit de by-pass (36) dans le tronçon de mélange (48) du deuxième conduit d'évacuation (30) sensiblement selon la direction et le sens d'écoulement dans le tronçon de mélange (48) des gaz détendus dans la turbine basse pression (14), pour accroître la quantité de mouvement des gaz détendus dans la turbine basse pression (14) par mélange avec les gaz dérivés selon le principe d'un éjecteur aérodynamique, dont le flux propulseur est constitué par les gaz dérivés par le deuxième conduit de by-pass (36) de la turbine basse pression (14), et le flux entraîné est prélevé sur les gaz détendus dans la turbine basse pression (20).

14. Dispositif selon la revendication 13, **caractérisé en ce que** le deuxième tronçon de mélange (48) débouche dans un diffuseur divergent (50) débouchant sur des moyens de traitement (68, 70) des gaz d'échappement.

15. Dispositif selon l'une quelconque des revendications précédentes, **caractérisé en ce que** le turbine basse pression (14) est une turbine radiale alimentée en gaz par une volute (29).

## Claims

1. Supercharging device for an internal combustion engine, of the type comprising a high-pressure turbine (20) which is connected to a compressor (18), a pipe (26) for charging the high-pressure turbine (20) with pressurised gases, an exhaust pipe (28) for the gases which are depressurised in the high-pressure turbine (20), and bypass means (32, 34) for the high-pressure turbine (20) comprising a bypass pipe which connects the charging pipe (26) to the exhaust pipe (28), and a low-pressure turbine (14) which is connected to a compressor (12) and which is charged with gases from the exhaust pipe (28) of the high-pressure turbine (20), **characterized in that** the bypass pipe (32) of the high-pressure turbine (20) opens in the exhaust pipe (28) of the high-pressure turbine (20) via a pressure-reduction nozzle (34) which allows the gases derived by the bypass pipe (32) to be discharged in a mixing portion (46) of the exhaust pipe (28) substantially in accordance with the direction and sense of flow in the mixing portion (46) of the gases which are depressurised in the high-pressure turbine (20), in order to increase the flow rate of the gases which are depressurized in the high-pressure turbine (20) by mixing with the derived gases in accordance with the principle of an aerodynamic ejector, whose propulsion flow is constituted by the gases which are derived by the bypass pipe (32) of the high-pressure turbine (20), and the conveyed flow is drawn from the gases which are depressurised in the high-pressure turbine (20).

2. Device according to claim 1, **characterized in that** the cross-section of the neck of the nozzle (34) is adjustable.

3. Device according to claim 2, **characterized in that** the cross-section of the neck of the nozzle (34) of the bypass means (32, 34) of the high-pressure turbine (20) is adjustable between a minimum value, preferably zero, and a maximum value of between one and two times the critical cross-section of the high-pressure turbine (20), and the critical cross-section of the low-pressure turbine (14) is between two and three times the critical cross-section of the high-pressure turbine (20).

4. Device according to any one of the preceding claims, **characterized in that** the nozzle (34) is constituted by a convergent annular channel (39) which is delimited by the internal wall of a convergent tube (40) and the external wall of a central body (42), whose relative position can be adjusted between a position for closing the nozzle (34) and a maximum opening position of the nozzle (34).

5. Device according to claim 4, **characterized in that** the convergent tube (40) is fixed relative to a casing of the high-pressure turbine (20) and the central body (42) can be moved relative to the casing.

6. Device according to claim 4, **characterized in that** the mixing portion (46) is charged with gases which are depressurised in the high-pressure turbine (20) via an annular channel (49) which is delimited between a widened portion (46a) which extends the mixing portion in an upstream direction and an external wall of the convergent tube (40) of the nozzle (34).

7. Device according to claim 6, **characterized in that** the convergent tube (40) can be moved relative to a casing of the high-pressure turbine (20) between a position for closing the channel (39) of the nozzle (34), and a position for closing the annular channel (49) for charging the mixing portion (46) with gases which are depressurised in the high-pressure turbine (20).

8. Device according to claim 7, **characterized in that** the central body (42) of the nozzle (34) can be moved relative to the casing of the high-pressure turbine (20).

9. Device according to any one of the preceding claims, **characterized in that** the internal wall of the mixing portion (46) is a ruled surface which is supported on a circular intake cross-section of the mixing portion (46) and on the critical cross-section of the volute (29) for charging the low-pressure turbine (14) so as to constitute a tangential extension of that volute (29).

10. Device according to any one of the preceding claims, **characterized in that** it comprises bypass means (38) of the low-pressure turbine (14), comprising a second bypass pipe (36) which is charged from the exhaust pipe (28) of the high-pressure turbine (20) upstream of the nozzle (34).

11. Device according to claim 10, **characterized in that** it comprises an adjustable closure device (86, 38) of the second bypass pipe (36) in order to adjust the flow of derived gases in the second bypass pipe (36).

12. Device according to claim 11 depending on claim 7, **characterized in that**, when the closure device (84) is in a maximum opening position, the second bypass pipe (36) has a cross-section that is substantially equal to the cross-section of the exhaust pipe (28) of the high-pressure turbine (20).

13. Device according to any one of claim 10 to 12, **characterized in that** the second bypass pipe (36) opens in a mixing portion (48) of a second exhaust pipe (30) of the gases which are depressurised in the low-pressure turbine (14) via a pressure-reduction nozzle (38) which allows the discharge of the derived gases via the second bypass pipe (36) in the mixing portion (48) of the second exhaust pipe (30) substantially in the direction and sense of flow in the mixing portion (48) of the gases which are depressurised in the low-pressure turbine (14), in order to increase the flow rate of the gases which are depressurised in the low-pressure turbine (14) by mixing with the derived gases in accordance with the principle of an aerodynamic ejector, whose propulsion flow is constituted by the gases which are derived by the second bypass pipe (36) of the low-pressure turbine (14), and the conveyed flow is drawn from the gases which are depressurised in the low-pressure turbine (20).

14. Device according to claim 13, **characterized in that** the second mixing portion (48) opens in a divergent diffuser (50) which opens at means (68, 70) for processing the exhaust gases.

15. Device according to any one of the preceding claims, **characterized in that** the low-pressure turbine (14) is a radial turbine which is charged with gases by a volute (29).

## Patentansprüche

1. Vorrichtung zur Aufladung für einen internen Verbrennungsmotor des Typs, der eine Hochdruckturbine (20) beinhaltet, die mit einem Kompressor (18), einer Zuführungsleitung (26) der Hochdruckturbine (20) mit unter Hochdruck stehendem Gas, einer Abführungsleitung (28) für Gas, das sich in der Hochdruckturbine (20) ausgedehnt hat, und Bypass-Mitteln (32, 34) der Hochdruckturbine (20) gekoppelt ist, die eine Bypass-Leitung (32), die die Zuführungsleitung (26) mit der Abführungsleitung (28) verbindet und eine Niederdruckturbine (14), die mit einem Kompressor (12) gekoppelt ist und über die Abführungsleitung (28) der Hochdruckturbine (20) mit Gas gespeist wird, beinhaltet, **dadurch gekennzeichnet,**
**dass** die Bypass-Leitung (32) der Hochdruckturbine (20), die durch eine Expansionsdüse (34) in die Abführungsleitung (28) der Hochdruckturbine (20) mündet, es ermöglicht, dass das Gas, das von der Bypass-Leitung (32) in ein/en Mischungsabschnitt/-stück (46) der Abführungsleitung abgeleitet wurde, entsprechend der Steuerung und der Richtung des Ausflusses des Gases, das sich in der Hochdruckturbine (20) ausgedehnt hat, in den Mischungsabschnitt (48) wahrnehmbar ausgestoßen wird, um die Menge der Bewegung des Gases, das sich in der Hochdruckturbine (20) ausgedehnt hat, durch Vermischung mit dem Gas, das entsprechend des Prinzips eines aerodynamischen Ausstossers abgeleitet wurde, zu vergrößern, dessen Antriebsfluss durch das Gas gebildet wird, das durch die Bypass-Leitung (32) der Hochdruckturbine (20) abgeleitet wurde, und der **dadurch** herbeigeführte Fluss wird dem Gas entnommen, das sich in der Hochdruckturbine (20) ausgedehnt hat.

2. Vorrichtung gemäß Anspruch 1, **dadurch gekennzeichnet, dass** der Abschnitt des Halses der Düse (34) regulierbar/steuerbar ist.

3. Vorrichtung gemäß Anspruch 2, **dadurch gekennzeichnet, dass** der Abschnitt des Halses der Düse (34) der By-Pass-Mittel (32, 34) der Hochdruckturbine (20) zwischen einem Minimalwert, der vorzugsweise null ist, und einem Maximalwert, der zwischen dem ein- oder zwei-fachen des kritischen Querschnitts der Hochdruckturbine (20) liegt, regulierbar/steuerbar ist, und der kritische Querschnitt der Niederdruckturbine (14) zwischen dem zwei- oder drei-fachen des kritischen Querschnitts der Hochdruckturbine (20) liegt.

4. Vorrichtung gemäß irgendeinem der vorangehenden Ansprüche, **dadurch gekennzeichnet, dass** die Düse (34) durch einen ringförmigen, konvergenten Kanal (39) gebildet wird, der durch die Innenwand eines konvergenten Rohrs (40) und durch die Außenwand eines Zentralkörpers (42) begrenzt wird, dessen relative Position zwischen einer Schließposition der Düse (34) und einer maximalen Öffnungsposition der Düse (34) regulierbar/steuerbar ist.

5. Vorrichtung gemäß Anspruch 4, **dadurch gekennzeichnet, dass** das konvergente Rohr (40) im Verhältnis zu einem Gehäuse der Hochdruckturbine (20) befestigt ist, und der Zentralkörper (42) ist im Verhältnis zu besagtem Gehäuse beweglich.

6. Vorrichtung gemäß Anspruch 4, **dadurch gekennzeichnet, dass** der Mischungsabschnitt (46), der durch einen ringförmigen Kanal (49), der zwischen einer Aufweitung (46a), die den Mischungsabschnitt (46) stromaufwärts verlängert, und einer Außenwand des konvergenten Rohrs (40) der Düse (34) abgegrenzt ist, mit Gas gespeist wird, das sich in der Hochdruckturbine (20) ausgedehnt hat.

7. Vorrichtung gemäß Anspruch 6, **dadurch gekennzeichnet, dass** das konvergente Rohr (40) in Bezug auf ein Gehäuse der Hochdruckturbine (20) zwischen einer Schließposition des Kanals (39) der Düse (34) und einer Öffnungsposition des ringförmigen Kanals (49) zur Speisung des Mischungsabschnitts (46) mit Gas, das sich in der Hochdruckturbine (20) ausgedehnt hat, beweglich ist.

8. Vorrichtung gemäß Anspruch 7, **dadurch gekennzeichnet, dass** der Zentralkörper (42) der Düse (34) in Bezug auf das Gehäuse der Hochdruckturbine (20) beweglich ist.

9. Vorrichtung gemäß irgendeinem der vorangehenden Ansprüche, **dadurch gekennzeichnet, dass** die Innenwand des Mischungsabschnitts (46) eine geregelte Oberfläche ist, die sich auf einer runden Öffnung des Mischungsabschnitts (46) und auf dem rechten kritischen Querschnitt der Zuführungsspirale/-schnecke (29) der Niederdruckturbine (14) in der Weise abstützt, um eine berührende Verlängerung dieser Zuführung (29) zu bilden.

10. Vorrichtung gemäß irgendeinem der vorangehenden Ansprüche, **dadurch gekennzeichnet, dass** sie Bypass-Mittel (36) der Niederdruckturbine (14) beinhaltet, die eine zweite Bypass-Leitung (36) beinhalten, die aus der Abführungsleitung (28) der Hochdruckturbine (20) oberhalb der Düse (34) gespeist wird.

11. Vorrichtung gemäß Anspruch 10, **dadurch gekennzeichnet, dass** sie eine regulierbare/steuerbare Verschlussvorrichtung (86, 38) der zweiten Bypass-Leitung (36) beinhaltet, um die Durchflussmenge des Gases zu regeln, das sich in der zweiten Bypass-Leitung (36) ausgedehnt hat.

12. Vorrichtung gemäß dem von Anspruch 7 abhängigen Anspruch 11, **dadurch gekennzeichnet, dass** -wenn sich die Verschlussvorrichtung (84) in einer maximalen Öffnungsposition befindet- die zweite Bypass-Leitung (36) über einen Querschnitt verfügt, der merklich gleich dem Querschnitt der Abführungsleitung (28) der Hochdruckturbine (20) ist.

13. Vorrichtung gemäß irgendeinem der Ansprüche 10 bis 12, **dadurch gekennzeichnet, dass** die zweite Bypass-Leitung (36) in einen Mischungsabschnitt (48) einer zweiten Abführungsleitung (30) für Gas mündet, das sich durch eine Expansionsdüse (38) in der Niederdruckturbine (14) ausgedehnt hat, was den Ausstoß des Gases ermöglicht, das durch die zweite Bypass-Leitung (36) in den Mischungsabschnitt (48) der zweiten Abführungsleitung (30) entsprechend der Steuerung und der Abflussrichtung im Mischungsabschnitt (48) für Gas wahrnehmbar abgeleitet wurde, das sich in der Niederdruckturbine (14) ausgedehnt hat, um die Menge der Bewegung des Gases, das sich in der Niederdruckturbine (14) ausgedehnt hat, durch Mischung mit dem Gas zu vergrößern, das gemäß des Prinzips eines aerodynamischen Ausstossers abgeleitet wurde, dessen Antriebsfluss durch das Gas gebildet wurde, das durch die zweite Bypass-Leitung (36) der Niederdruckturbine (14) abgeleitet wurde, und der **dadurch** entstandene Fluss ergibt sich aus dem Gas, das sich in der Niederdruckturbine (14) ausgedehnt hat.

14. Vorrichtung gemäß Anspruch 13, **dadurch gekennzeichnet, dass** der zweite Mischungsabschnitt (48) in einen divergierenden Diffusor (50) mündet, der in die Verarbeitungsmittel (68, 70) für die Abgase mündet

15. Vorrichtung gemäß irgendeinem der vorangehenden Ansprüche, **dadurch gekennzeichnet, dass** die Niederdruckturbine (14) eine radiale Turbine ist, die durch eine Spirale/Schnecke (29) mit Gas gespeist wird.
